# EUROPÄISCHE PATENTSCHRIFT

(11) **EP 3 907 058 B1**
(45) Veröffentlichungstag und Bekanntmachung des Hinweises auf die Patenterteilung: **13.03.2024**
(21) Anmeldenummer: 20175384.5
(22) Anmeldetag: 19.05.2020
(51) Int. Cl.: B29C 65/02, B29C 65/44, B60K 15/03

(54) **KUNSTSTOFFBEHÄLTER MIT EINBAUTEIL UND VERFAHREN ZUR HERSTELLUNG DAVON**
PLASTIC CONTAINER WITH INSERTED ELEMENT AND METHOD OF MANUFACTURE THEREOF
RÉCIPIENT EN MATIÈRE PLASTIQUE POURVU D'UN INSERT ET PROCÉDÉ DE FABRICATION ASSOCIÉ

(30) Priorität: 07.05.2020 EP 20173362
(43) Veröffentlichungstag der Anmeldung: 10.11.2021
(73) Patentinhaber: MAGNA Energy Storage Systems GesmbH, 8261 Sinabelkirchen (AT)
(72) Erfinder: FUCHS, Thomas, 8261 Sinabelkirchen (AT); PREITLER, Andreas, 8101 Gratkorn (AT); PUCHLEITNER, Rainer, 8052 Graz (AT)
(74) Vertreter: Zangger, Bernd

(56) Entgegenhaltungen:
- US-A- 3 308 225
- US-A1- 2011 174 946
- US-A1- 2015 217 635

## Beschreibung

### Gebiet der Erfindung

Die vorliegende Erfindung betrifft ein Verfahren zur Herstellung eines Kunststoffbehälters, wobei zumindest ein Einbauteil an der Behälterwand des Kunststoffbehälters befestigt ist und einen solchen Kunststoffbehälter.

### Stand der Technik

Es ist bekannt Behälter, insbesondere Tanks für Kraftfahrzeuge, beispielsweise Kraftstofftanks, aus Kunststoff herzustellen, beispielsweise aus HDPE (High Density Polyethylen). Die Herstellung kann zum Beispiel durch Blasformen oder Tiefziehen erfolgen. Die Behälterwände solcher Kraftstofftanks aus Kunststoff können zur Reduktion unerwünschter Kohlenwasserstoffemissionen eine Barriereschicht, beispielsweise aus EVOH (Ethylen-Vinylalkohol-Copolymer), enthalten.

Es ist ferner bekannt, dass in und an Kunststofftanks Bauteile befestigt werden. Insbesondere können Einbauteile durch Verschweißung an einer erwärmten Behälterwand im Zuge der Herstellung des Kunststofftanks stoffschlüssig befestigt werden.

Ein- bzw. Anbauteile werden auch mittels zusätzlichen, verklipsten oder in 2K-Technik mitgespritzten, Bauteilen, sog. "Schweißkronen", welche aus dem gleichen Material, aus dem der Kunststoffbehälter hergestellt wird, im und am Behälter mittels Kalt- und Heißschweißverfahren verschweißt.

Außerdem gibt es Methoden, welche eine Art Nietverbindung herstellen, indem das erhitzte weiche Material des Behälters durch eine Öffnung des zu verschweißenden Bauteiles während des Fügeprozesses durchdringt und mittels Prägestempel das weiche Material auf der nach außen gewandten Seite verstemmt wird. Hier muss das Material des zu applizierenden Bauteiles nicht dem Material des Kunststoffbehälters entsprechen. Das Blasformteil kann ein Kunststoffkraftstoffbehälter sein, aber auch jedes beliebige andere Bauteil, welches aus einem Thermoplast hergestellt wird.

Beim aktuellen Stand der Technik zur Anbringung von Bauteilen durch Verschweißung müssen mehrere Aspekte und Rahmenbedingungen für eine geeignete Verschweißung geschaffen werden. Im Falle der Anbringung eines vorgewärmten Anschweißteils in das noch heiße Plattenmaterial muss die Wärmeeindringzone beachtet werden, um den Mehrschichtverbund nicht zu schädigen. Zumeist ist eine aufwändige Einstellung des Prozesses notwendig. Auch wird insbesondere für die Anbringung von Ventilen ein gewisser Abstand, der mehrere Millimeter betragen kann, für die Schweißkrone benötigt. Dies ist ein signifikanter technischer Nachteil für eine Vielzahl von Tankprojekten.

Im Falle einer Heißverstemmung muss rund um das eigentliche Bauteil für die Anbringungslaschen Einbauraum vorgehalten werden was zu Kompromissen in der Auslegung des Tanksystems führt und als signifikanter technischer Nachteil angesehen werden kann.

Durch die Erfindung soll zum einen ein zusätzlich erforderliches Bauteil zur Verschweißung von Bauteilen am oder im Kunststoffbehälter, welches aus demselben Material wie der Kunststoffbehälter bestehen muss, und zum zweiten der erforderliche Bauraum bzw. erforderliche Flächen, welche(r) für ein Heißverstemmverfahren mit Bauteilen aus unterschiedlichem Material benötigt wird, wegfallen.

Somit sollen Bauteile, welche aus einem nicht dem Blasformteil entsprechenden Material bestehen können, direkt am oder im Blasformteil appliziert werden können, ohne zusätzliche Werkzeuge und Bauteile zu benötigen.

Aus der US 2015/217635 A1 ist ein Kraftstofftank für ein Kraftfahrzeug bekannt, der durch Blasformen gebildet ist, in dem ein Einbauteil angebracht ist und der eine aus einem Kunstharz gebildete Außenwand aufweist, mit einer Vielzahl von Befestigungselementen, die an dem Einbauteil vorgesehen sind, wobei die Befestigungselemente mit einer Innenfläche der Außenwand des Kraftstofftanks schmelzverbunden sind, um das Einbauteil an dem Kraftstofftank zu befestigen, wobei jedes der Befestigungselemente einen Anschlagabschnitt zum Berühren der Innenfläche der Außenwand des Kraftstofftanks aufweist, der Anschlagabschnitt eine Anschlagfläche aufweist, die der Innenfläche der Außenwand des Kraftstofftanks zugewandt ist, und eine Vielzahl von Anschlagstiften, die jeweils von der Anschlagfläche in Richtung der Innenfläche der Außenwand des Kraftstofftanks vorstehen, wobei jeder Anschlagstift entweder eine säulenförmige Konfiguration oder eine kegelstumpfförmige Konfiguration aufweist, die jeweils entweder einen kreisförmigen Querschnitt oder einen elliptischen Querschnitt haben, und ein spannungsabsorbierendes Teil in einem der Anschlagstifte, der Anschlagfläche und der Außenwand des Kraftstofftanks vorgesehen ist.

Die US 2011/174946 A1 offenbart eine Teilbefestigungsstruktur, die ein mit einem Tank verbundenes Teil an einer Tankwand eines aus Harz hergestellten Kraftstofftanks befestigt, wobei die Teilbefestigungsstruktur einen Hakenabschnitt umfasst, der zusammen mit dem Teil ausgebildet ist, wobei der Hakenabschnitt in der Tankwand vergraben ist, wodurch das Teil an der Tankwand befestigt wird.

Aus der US 3 308 225 A ist ein Verfahren zur Herstellung eines Kaffee-Perkolators oder eines anderen Artikels zur Aufnahme einer Flüssigkeit bekannt, wobei der Artikel einen Behälter und eine Bodenplatte aus Metall aufweist, wobei die Bodenplatte an ihrem Umfang Öffnungen hat, wobei thermoplastisches Material des Behälters durch die Öffnungen der Bodenplatte reicht.

### Zusammenfassung der Erfindung

Es ist eine Aufgabe der Erfindung, ein Verfahren zur Herstellung eines Kunststoffbehälters anzugeben, dass die oben genannten Probleme vermeidet und insbesondere eine einfache und kostengünstige Methode zur Anbringung eines Einbauteils in einem Kunststoffbehälter angibt, wobei möglichst wenig Bauraum verloren geht und das Einbauteil auch aus einem anderen Material bestehen kann, als die Behälterwand. Eine weitere Aufgabe der Erfindung ist es einen Kunststoffbehälter anzugeben, der ein zuverlässig befestigtes Einbauteil aufweist und dabei auf die angegebene einfache Weise herstellbar ist.

Die Lösung der Aufgabe erfolgt durch ein Verfahren zur Herstellung eines Kunststoffbehälters, wobei der Kunststoffbehälter eine Behälterwand umfasst und zumindest ein Einbauteil an der Behälterwand befestigt ist, wobei das Einbauteil eine Befestigungsfläche aufweist mit von der Befestigungsfläche abstehenden Haltegeometrien, umfassend die Schritte, dass die Behälterwand zumindest in einem Befestigungsbereich erwärmt wird, dass die Befestigungsfläche des Einbauteils gegen den erwärmten Befestigungsbereich der Behälterwand gedrückt wird, wobei die Haltegeometrien in die Behälterwand eindringen ohne die Behälterwand zu durchdringen, so dass die freien Enden der Haltegeometrien im Inneren der Behälterwand zu liegen kommen, wobei der Kunststoff der Behälterwand zwischen den Haltegeometrien zu liegen kommt, so dass ein Formschluss zwischen den Haltegeometrien des Einbauteils und dem Kunststoff der Behälterwand besteht, wobei die Haltegeometrien so ausgebildet sind, dass jeweils Köpfe der Haltegeometrien, über Füße der Haltegeometrien mit kleinerem Querschnitt als die Köpfe der Haltegeometrien, mit der Befestigungsfläche verbunden sind, nämlich pilzförmig ausgebildet sind, wobei die Haltegeometrien sich linienförmig erstrecken, in einer Richtung normal auf den pilzförmigen Querschnitt, wobei mehrere linienförmige Haltegeometrien parallel nebeneinander angeordnet sind.

Erfindungsgemäß wird ein Einbauteil verwendet, das mehrere Haltegeometrien an einer Befestigungsfläche aufweist. Die Haltegeometrien werden erfindungsgemäß in eine warme, weiche Behälterwand aus Kunststoff gedrückt. Die Behälterwand kann beispielsweise im Zuge des Herstellungsverfahrens des Behälters, als insbesondere durch die Erhitzung bei der Formgebung des Behälters, erwärmt werden oder in einem gesonderten Prozess nach der Herstellung des Behälters erwärmt werden. Das Drücken der Haltegeometrien in die Behälterwand erfolgt mit einer solchen Kraft, dass die Haltegeometrien in die Behälterwand gelangen, jedoch die Behälterwand nicht durchdringen und diese daher nicht zerstören. Die "freien Enden" der Haltegeometrien, also die Enden der Haltegeometrien die von der Befestigungsfläche abgewandt sind, durchdringen die Behälterwand nicht. Die Haltegeometrien werden dadurch vom Kunststoff der Behälterwand auf einfache Weise gehalten, ohne die Behälterwand zu schwächen.

Eine derartige Verbindung kann auch mit Einbauteilen aus einem anderen Material als jenem der Behälterwand hergestellt werden. Die Einbauteile können also beispielsweise auch aus einem anderen Kunststoff bestehen als die Behälterwand, oder aus Metall. Die Verbindung wird durch einfaches Eindrücken erreicht und ist daher kostengünstig durchführbar. Durch die Verwendung mehrerer derartiger Haltegeometrien wird ein zuverlässiger Halt der Einbauteile erreicht.

Erfindungsgemäß bilden die Haltegeomtrien Hinterschneidungen aus und/oder weisen die Haltegeomtrien Formschlusselemente auf. Die Haltegeometrien können beispielsweise Flächen aufweisen, die im Wesentlichen hinterschnittig zur Fügerichtung ausgebildet sind. Durch derartige Haltegeometrien mit Hinterschneidungen und/oder Formschlusselementen wird ein besonders sicherer Halt der Einbauteile in den möglichen Belastungsrichtungen erreicht.

Die Haltegeometrien sind erfindungsgemäß so ausgebildet, dass jeweils Köpfe der Haltegeometrien über Füße der Haltegeometrien, mit kleinerem Querschnitt als die Köpfe der Haltegeometrien, mit der Befestigungsfläche verbunden sind, nämlich pilzförmig ausgebildet sind.

Die Befestigungsfläche des Einbauteils kann gegen den erwärmten Befestigungsbereich der Behälterwand so gedrückt werden, dass die Köpfe der Haltegeometrien in die Behälterwand eindringen und im Inneren der Behälterwand zu liegen kommen, wobei der Kunststoff der Behälterwand hinter den als Hinterschneidung wirkenden Köpfen zwischen den Füßen der Haltegeometrien zu liegen kommt, so dass ein Formschluss zwischen den Haltegeometrien des Einbauteils und dem Kunststoff der Behälterwand besteht. Die Haltegeometrien haben dann also einen Querschnitt, bei welchem ein hinterschnittiger Kopf breiter ist, als Fußteile, die diesen Kopf mit der Befestigungsfläche verbinden. Derartige Haltegeometrien werden in die warme, weiche Behälterwand aus Kunststoff gedrückt. Das Drücken der Haltegeometrien in die Behälterwand erfolgt mit einer solchen Kraft, dass die Köpfe und zumindest abschnittsweise die Füße der Haltegeometrien in die Behälterwand gelangen, jedoch die Behälterwand nicht durchdringen und diese daher nicht zerstören. Hinter den Köpfen der Haltegeometrien entsteht hierdurch eine formschlüssige Verbindung zwischen dem Kunststoff der Behälterwand und den Haltegeometrien des Einbauteils.

Erfindungsgemäß erstrecken sich die Haltegeometrien linienförmig, in einer Richtung normal auf einen pilzförmigen Querschnitt, wobei erfindungsgemäß mehrere linienförmige Haltegeometrien parallel nebeneinander angeordnet sind.

Die Behälterwand weist im Befestigungsbereich bevorzugt eine Barriereschicht auf. Die Befestigungsfläche des Einbauteils wird dann vorzugsweise so gegen den erwärmten Befestigungsbereich der Behälterwand gedrückt, dass die Haltegeometrien vor der Barriereschicht zu liegen kommen, also die Barriereschicht nicht durchdringen. Die Barriereschicht bleibt daher bei einem derartigen Verbindungsverfahren intakt, so dass das Emissionsverhalten des Behälters verbessert ist gegenüber anderen Befestigungsverfahren, beispielsweise mit nutartig den Behälter durchdringenden Verbindungselementen.

Die Befestigungsfläche des Einbauteils wird gegen den erwärmten Befestigungsbereich der Behälterwand bevorzugt so gedrückt, dass die Befestigungsfläche des Einbauteils an dem Befestigungsbereich der Behälterwand anliegt.

Die Befestigungsfläche des Einbauteils ist bevorzugt vollflächig ausgebildet, so dass sie keine Öffnungen aufweist. Der Kunststoff kann daher geschlossene Räume zwischen den Füßen der Haltegeometrien ausfüllen, so dass ein besonders guter formschlüssiger Halt entsteht. Zudem ist es bei einer geschlossenen Befestigungsfläche einfacher möglich, das Einbauteil nur so weit wie erforderlich in die Behälterwand zu drücken und somit die Behälterwand und gegebenenfalls die Barriereschicht nicht zu beschädigen.

Ein erfindungsgemäßer Kunststoffbehälter umfasst somit eine Behälterwand und zumindest ein Einbauteil, welches an der Behälterwand befestigt ist. Das Einbauteil weist eine Befestigungsfläche auf mit von der Befestigungsfläche abstehenden Haltegeometrien, wobei die Befestigungsfläche des Einbauteils an einem Befestigungsbereich der Behälterwand befestigt ist, so dass die Haltegeometrien in die Behälterwand eingedrungen sind und im Inneren der Behälterwand liegen, ohne die Behälterwand zu durchdringen, wobei der Kunststoff der Behälterwand zwischen den Haltegeometrien liegt, so dass ein Formschluss zwischen den Haltegeometrien des Einbauteils und dem Kunststoff der Behälterwand besteht, wobei die Haltegeometrien so ausgebildet sind, dass jeweils Köpfe der Haltegeometrien, über Füße der Haltegeometrien mit kleinerem Querschnitt als die Köpfe der Haltegeometrien, mit der Befestigungsfläche verbunden sind, nämlich pilzförmig ausgebildet sind, wobei die Haltegeometrien sich linienförmig erstrecken, in einer Richtung normal auf den pilzförmigen Querschnitt, wobei mehrere linienförmige Haltegeometrien parallel nebeneinander angeordnet sind. Dieser Formschluss entsteht bevorzugt ausschließlich durch das Eindrücken der Haltegeometrie in die Behälterwand, ohne einer zusätzlichen, formgebende Operation.

Die Haltegeometrien sind erfindungsgemäß im Querschnitt so ausgebildet, dass jeweils Köpfe der Haltegeometrien, über Füße der Haltegeometrien mit kleinerem Querschnitt als die Köpfe der Haltegeometrien, mit der Befestigungsfläche verbunden sind, nämlich pilzförmig. Der Kunststoff der Behälterwand kann hinter den als Hinterschneidung wirkenden Elementen der Haltegeometrien, beispielsweise hinter Köpfen, zwischen den Fü-ßen der Haltegeometrien liegen, so dass ein Formschluss zwischen den Haltegeometrien des Einbauteils und dem Kunststoff der Behälterwand besteht.

Die Haltegeometrien können beispielsweise an ihrer dem Behälter zugewandten Oberseite spitz ausgeführt sein, um leichter in die Behälterwand einzudringen, und/oder an ihrer dem Behälter abgewandten Seite flach ausgebildet sein oder konkav oder nach außen zum Einbauteil hin geneigt sein, um einen besseren Formschluss bzw. eine bessere Hinterschneidung zu erreichen.

Die Haltegeometrien erstrecken sich erfindungsgemäß linienförmig, in einer Richtung normal auf den pilzförmigen Querschnitt, wobei erfindungsgemäß mehrere linienförmige Haltegeometrien parallel nebeneinander angeordnet sind.

Die Behälterwand weist im Befestigungsbereich bevorzugt eine Barriereschicht auf und die Haltegeometrien liegen vor der Barriereschicht, durchdringen also die Barriereschicht nicht.

Die Befestigungsfläche des Einbauteils liegt bevorzugt an dem Befestigungsbereich der Behälterwand an.

Die Befestigungsfläche des Einbauteils ist vorzugsweise vollflächig ausgebildet, weist also keine Öffnungen auf.

### Kurzbeschreibung der Zeichnungen

Die Erfindung wird im Folgenden beispielhaft unter Bezugnahme auf die Zeichnungen beschrieben.
- Fig. 1: ist eine dreidimensionale Ansicht der Befestigungsfläche eines Einbauteils eines erfindungsgemäßen Kunststoffbehälters.
- Fig. 2: ist eine Schnittansicht, welche den Bereich der Verbindung zwischen Einbauteil und Behälterwand eines erfindungsgemäßen Kunststoffbehälters zeigt.

### Detaillierte Beschreibung der Erfindung

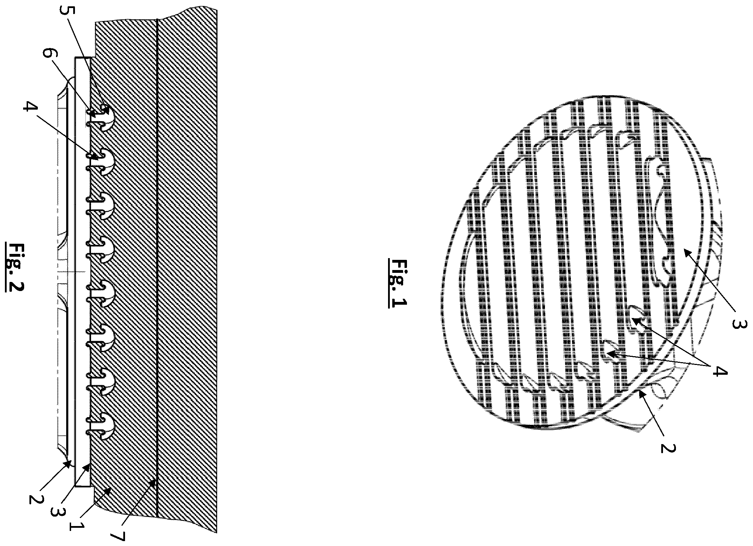

In Fig. 1 ist die Befestigungsfläche 3 eines Einbauteils 2 eines erfindungsgemäßen Kunststoffbehälters dargestellt. Die Befestigungsfläche 3 des Einbauteils 2 weist im Querschnitt hinterschnittige Haltegeometrien 4 auf, die sich, in mehreren zueinander parallelen Bahnen, linienförmig entlang der Befestigungsfläche 3 erstrecken. Die Befestigungsfläche 3 ist dazu ausgebildet, in eine erwärmte Behälterwand 1 eines Kunststoffbehälters gedrückt zu werden, wobei sich die Haltegeometrien 4 im Kunststoff der Behälterwand 1 verhaken.

In der Behälterwand 1 eines Kunststoffbehälters, beispielsweise eines Kraftstofftanks, der Fig. 2 ist ein Einbauteil 2 befestigt.

Das Einbauteil 2 weist eine Befestigungsfläche 3 auf mit im Querschnitt hinterschnittigen, nämlich pilzförmigen, Haltegeometrien 4, so dass jeweils Köpfe 5 der Haltegeometrien 4, über Füße 6 der Haltegeometrien 4 mit kleinerem Querschnitt als die Köpfe 5 der Haltegeometrien 4, mit der Befestigungsfläche 3 verbunden sind. Die Befestigungsfläche 3 des Einbauteils 2 ist an einem Befestigungsbereich der Behälterwand 1 befestigt, so dass die Köpfe 5 der Haltegeometrien 4 in die Behälterwand 1 eingedrungen sind und im Inneren der Behälterwand 1 liegen, ohne die Behälterwand zu durchdringen, wobei der Kunststoff der Behälterwand 1 hinter den als Hinterschneidung wirkenden Köpfen 5, zwischen den Füßen 2 der Haltegeometrien 4, liegt, so dass ein Formschluss zwischen den Haltegeometrien 4 des Einbauteils 2 und dem Kunststoff der Behälterwand 1 besteht.

Die Haltegeometrien 4 erstrecken sich linienförmig, in einer Richtung normal auf den hinterschnittigen, nämlich pilzförmigen, Querschnitt, wobei mehrere linienförmige Haltegeometrien 4 parallel nebeneinander angeordnet sind.

Die Behälterwand 1 weist im Befestigungsbereich eine Barriereschicht 7 auf und die Köpfe 5 der Haltegeometrien 4 liegen vor der Barriereschicht 7, so dass die Haltegeometrien 4 die Barriereschicht 7 nicht durchdringen.

Die Befestigungsfläche 3 des Einbauteils 2 liegt an dem Befestigungsbereich der Behälterwand 1 an.

Die Befestigungsfläche 3 des Einbauteils 2 ist vollflächig ausgebildet, weist also keine Öffnungen auf.

Die am oder im Kunststoffbehälter zu befestigenden Einbauteile 2 werden in das weiche Material der Behälterwand 1 eingedrückt. Dabei können diese Einbauteile 2, prozessabhängig vorgewärmt, partiell vorgewärmt oder auf Raumtemperatur vortemperiert sein.

Die Behälterwand 1 muss dabei so weich sein, dass der für die Verbindung vorgesehen Bereich des zu fügenden Bauteiles 2 so weit eingedrückt werden kann, dass das durch das Eindrücken verdrängte Material in die vorgesehenen Bereiche der Verbindungsgeometrie bzw. Haltegeometrie 4 einfließen. Dies kann durch Einsatz direkt im Prozess oder durch eine lokale Erwärmung der Behälterwand 1 durchgeführt werden.

Es können hierfür verschiedene Geometrien zum Einsatz kommen, welche mit Verdrängungsgeometrie und Materialeinfließgeometrie ausgeführt sind.

Durch das Eindrücken der Haltegeometrie 4 und das Hinterfließen des Kunststoffs in einen sich erweiternden Querschnitt, also Kopf 5, der Haltegeometrie 4 kann eine unlösbare dauerfeste Verbindung geschaffen werden.

Die Formschlussverbindung wird bevorzugt so ausgeführt, dass es beim Eindrückvorgang zu keiner Beschädigung der Barriereschicht 7 der Tankwand 1 kommt. Dies wird durch eine geeignete Auslegung der Hinterschnittgeometrie bzw. Haltegeometrie 4 sichergestellt.

### Bezugszeichenliste

- 1: Behälterwand
- 2: Einbauteil
- 3: Befestigungsfläche
- 4: Haltegeometrie
- 5: Kopf
- 6: Fuß
- 7: Barriereschicht

## Patentansprüche

1. Verfahren zur Herstellung eines Kunststoffbehälters, wobei der Kunststoffbehälter eine Behälterwand (1) umfasst und zumindest ein Einbauteil (2) an der Behälterwand (1) befestigt ist, wobei das Einbauteil (2) eine Befestigungsfläche (3) aufweist mit von der Befestigungsfläche (3) abstehenden Haltegeometrien (4), umfassend die Schritte,
dass die Behälterwand (1) zumindest in einem Befestigungsbereich erwärmt wird,
dass die Befestigungsfläche (3) des Einbauteils (2) gegen den erwärmten Befestigungsbereich der Behälterwand (1) gedrückt wird, wobei die Haltegeometrien (4) in die Behälterwand (1) eindringen ohne die Behälterwand (1) zu durchdringen, so dass die freien Enden der Haltegeometrien (4) im Inneren der Behälterwand (1) zu liegen kommen, wobei der Kunststoff der Behälterwand (1) zwischen den Haltegeometrien (4) zu liegen kommt, so dass ein Formschluss zwischen den Haltegeometrien (4) des Einbauteils (2) und dem Kunststoff der Behälterwand (1) besteht,
wobei die Haltegeometrien (4) so ausgebildet sind, dass jeweils Köpfe (5) der Haltegeometrien (4), über Füße (6) der Haltegeometrien (4) mit kleinerem Querschnitt als die Köpfe (5) der Haltegeometrien (4), mit der Befestigungsfläche (3) verbunden sind, nämlich pilzförmig ausgebildet sind, wobei die Haltegeometrien (4) sich linienförmig erstrecken, in einer Richtung normal auf den pilzförmigen Querschnitt, wobei mehrere linienförmige Haltegeometrien (4) parallel nebeneinander angeordnet sind.

2. Verfahren nach Anspruch 1,
**dadurch gekennzeichnet, dass** die Behälterwand (1) im Befestigungsbereich eine Barriereschicht (7) aufweist und die Befestigungsfläche (3) des Einbauteils (2) gegen den erwärmten Befestigungsbereich der Behälterwand (1) so gedrückt wird, dass die Haltegeometrien (4) vor der Barriereschicht (7) zu liegen kommen, also die Barriereschicht (7) nicht durchdringen.

3. Verfahren nach zumindest einem der vorhergehenden Ansprüche,
**dadurch gekennzeichnet, dass** die Befestigungsfläche (3) des Einbauteils (2) gegen den erwärmten Befestigungsbereich der Behälterwand (1) so gedrückt wird, dass die Befestigungsfläche (3) des Einbauteils (2) an dem Befestigungsbereich der Behälterwand (1) zu liegen kommt.

4. Verfahren nach zumindest einem der vorhergehenden Ansprüche,
**dadurch gekennzeichnet, dass** die Befestigungsfläche (3) des Einbauteils (2) vollflächig ausgebildet ist, also keine Öffnungen aufweist.

5. Kunststoffbehälter, wobei der Kunststoffbehälter eine Behälterwand (1) umfasst und zumindest ein Einbauteil (2) an der Behälterwand (1) befestigt ist,
wobei das Einbauteil (2) eine Befestigungsfläche (3) aufweist mit von der Befestigungsfläche (3) abstehenden Haltegeometrien (4), wobei die Haltegeometrien (4) in die Behälterwand (1) eindringen ohne die Behälterwand (1) zu durchdringen, so dass die freien Enden der Haltegeometrien (4) im Inneren der Behälterwand (1) liegen, wobei der Kunststoff der Behälterwand (1) zwischen den Haltegeometrien (4) liegt, so dass ein Formschluss zwischen den Haltegeometrien (4) des Einbauteils (2) und dem Kunststoff der Behälterwand (1) besteht, wobei die Haltegeometrien (4) so ausgebildet sind, dass jeweils Köpfe (5) der Haltegeometrien (4), über Füße (6) der Haltegeometrien (4) mit kleinerem Querschnitt als die Köpfe (5) der Haltegeometrien (4), mit der Befestigungsfläche (3) verbunden sind, nämlich pilzförmig ausgebildet sind, wobei die Haltegeometrien (4) sich linienförmig erstrecken, in einer Richtung normal auf den pilzförmigen Querschnitt, wobei mehrere linienförmige Haltegeometrien (4) parallel nebeneinander angeordnet sind.

6. Kunststoffbehälter nach Anspruch 5,
**dadurch gekennzeichnet, dass** die Behälterwand (1) im Befestigungsbereich eine Barriereschicht (7) aufweist und die Haltegeometrien (4) vor der Barriereschicht (7) liegen, also die Barriereschicht (7) nicht durchdringen.

7. Kunststoffbehälter nach zumindest einem der Ansprüche 5 bis 6,
**dadurch gekennzeichnet, dass** die Befestigungsfläche (3) des Einbauteils (2) an dem Befestigungsbereich der Behälterwand (1) anliegt.

8. Kunststoffbehälter nach zumindest einem der Ansprüche 5 bis 7,
**dadurch gekennzeichnet, dass** die Befestigungsfläche (3) des Einbauteils (2) vollflächig ausgebildet ist, also keine Öffnungen aufweist.

## Claims

1. Method for manufacturing a plastic container, wherein the plastic container comprises a container wall (1) and at least one inserted element (2) is attached to the container wall (1), wherein the inserted element (2) has an attachment surface (3) with holding geometries (4) projecting from the attachment surface (3), comprising the steps of
heating the container wall (1) at least in an attachment region,
pressing the attachment surface (3) of the inserted element (2) against the heated attachment region of the container wall (1),
wherein the holding geometries (4) intrude into the container wall (1) without fully penetrating the container wall (1), with the result that the free ends of the holding geometries (4) come to lie in the interior of the container wall (1), wherein the plastic of the container wall (1) comes to lie between the holding geometries (4) in a way such that there is a form fit between the holding geometries (4) of the inserted element (2) and the plastic of the container wall (1),
wherein the holding geometries (4) are designed such that heads (5) of the holding geometries (4) are in each case connected to the attachment surface (3) via feet (6) of the holding geometries (4) having a smaller cross section than the heads (5) of the holding geometries (4), to be specific are designed in the shape of mushrooms, wherein the holding geometries (4) extend linearly, in a direction normal to the mushroom-shaped cross section, wherein a plurality of linear holding geometries (4) are arranged in parallel side-by-side.

2. Method according to Claim 1,
**characterized in that** the container wall (1) has a barrier layer (7) in the attachment region and the attachment surface (3) of the inserted element (2) is pressed against the heated attachment region of the container wall (1) in a manner such that the holding geometries (4) come to lie in front of the barrier layer (7), that is to say do not fully penetrate the barrier layer (7).

3. Method according to at least one of the preceding claims,
**characterized in that** the attachment surface (3) of the inserted element (2) is pressed against the heated attachment region of the container wall (1) in a manner such that the attachment surface (3) of the inserted element (2) comes to lie on the attachment region of the container wall (1).

4. Method according to at least one of the preceding claims,
**characterized in that** the attachment surface (3) of the inserted element (2) is designed as a full surface, that is to say does not have openings.

5. Plastic container, wherein the plastic container comprises a container wall (1) and at least one inserted element (2) is attached to the container wall (1),
wherein the inserted element (2) has an attachment surface (3) with holding geometries (4) projecting from the attachment surface (3), wherein the holding geometries (4) intrude into the container wall (1) without fully penetrating the container wall (1), with the result that the free ends of the holding geometries (4) lie in the interior of the container wall (1), wherein the plastic of the container wall (1) lies between the holding geometries (4) in a way such that there is a form fit between the holding geometries (4) of the inserted element (2) and the plastic of the container wall (1), wherein the holding geometries (4) are designed such that heads (5) of the holding geometries (4) are in each case connected to the attachment surface (3) via feet (6) of the holding geometries (4) having a smaller cross section than the heads (5) of the holding geometries (4), to be specific are designed in the shape of mushrooms, wherein the holding geometries (4) extend linearly, in a direction normal to the mushroom-shaped cross section, wherein a plurality of linear holding geometries (4) are arranged in parallel side-by-side.

6. Plastic container according to Claim 5,
**characterized in that** the container wall (1) has a barrier layer (7) in the attachment region, and the holding geometries (4) lie in front of the barrier layer (7), that is to say do not fully penetrate the barrier layer (7).

7. Plastic container according to at least one of Claims 5 to 6,
**characterized in that** the attachment surface (3) of the inserted element (2) rests against the attachment region of the container wall (1).

8. Plastic container according to at least one of Claims 5 to 7,
**characterized in that** the attachment surface (3) of the inserted element (2) is designed as a full surface, that is to say does not have openings.

## Revendications

1. Procédé de fabrication d'un récipient en matière synthétique, le récipient en matière synthétique comprenant une paroi de récipient (1) et au moins un élément structurel intérieur (2) étant fixé à la paroi de récipient (1), l'élément structurel intérieur (2) comportant une surface de fixation (3) ayant des géométries de retenue (4) dépassant de la surface de fixation (3), ledit procédé comprenant les étapes suivantes,
la paroi de récipient (1) est chauffée au moins dans une zone de fixation,
la surface de fixation (3) de l'élément structurel intérieur (2) est pressée contre la zone de fixation chauffée de la paroi du conteneur (1),
les géométries de retenue (4) pénétrant dans la paroi de récipient (1) sans traverser la paroi de récipient (1) de sorte que les extrémités libres des géométries de retenue (4) viennent en appui à l'intérieur de la paroi de récipient (1), la matière synthétique de la paroi de récipient (1) venant entre les géométries de retenue (4) de façon à réaliser une liaison par complémentarité de formes entre les géométries de retenue (4) de l'élément structurel intérieur (2) et la matière synthétique de la paroi de récipient (1),
les géométries de retenue (4) étant conçues de telle sorte que les têtes (5) des géométries de retenue (4) soient reliés à la surface de fixation (3) par le biais de pieds (6) de géométries de retenue (4) de section transversale plus petite que celle des têtes (5) des géométries de retenue (4), c'est-à-dire qu'elles ont une forme de champignon, les géométries de retenue (4) s'étendant linéairement dans une direction normale à la section transversale en forme de champignon, plusieurs géométries de retenue linéaires (4) étant disposées parallèlement les unes aux autres.

2. Procédé selon la revendication 1,
**caractérisé en ce que** la paroi de récipient (1) comporte une couche formant barrière (7) dans la zone de fixation et la surface de fixation (3) de l'élément structurel intérieur (2) est pressée contre la zone de fixation chauffée de la paroi de récipient (1) de telle sorte que les géométries de retenue (4) se trouvent devant la couche formant barrière (7), donc ne traversent pas la couche formant barrière (7).

3. Procédé selon l'une au moins des revendications précédentes, **caractérisé en ce que** la surface de fixation (3) de l'élément structurel intérieur (2) est pressée contre la zone de fixation chauffée de la paroi de récipient (1) de telle sorte que la surface de fixation (3) de l'élément structurel intérieur (2) vienne en appui sur la zone de fixation de la paroi de récipient (1).

4. Procédé selon l'une au moins des revendications précédentes, **caractérisé en ce que** la surface de fixation (3) de l'élément structurel intérieur (2) est formée sur toute la surface, donc ne comporte pas d'ouvertures.

5. récipient en matière synthétique, le récipient en matière synthétique comportant une paroi de récipient (1) et au moins un élément structurel intérieur (2) étant fixé à la paroi de récipient (1),
l'élément structurel intérieur (2) comportant une surface de fixation (3) pourvue de géométries de retenue (4) qui dépassent de la surface de fixation (3),
les géométries de retenue (4) pénétrant dans la paroi de récipient (1) sans traverser la paroi de récipient (1) de sorte que les extrémités libres des géométries de retenue (4) se trouvent à l'intérieur de la paroi de récipient (1), la matière synthétique de la paroi de récipient (1) se trouvant entre les géométries de retenue (4) de façon à réaliser une liaison par complémentarité de formes entre les géométries de retenue (4) de l'élément structurel intérieur (2) et la matière synthétique de la paroi de récipient (1), les géométries de retenue (4) étant conçues de telle sorte que les têtes (5) des géométries de retenue (4) sont reliés à la surface de fixation (3) par le biais de pieds (6) des géométries de retenue (4) de section transversale plus petite que celle des têtes (5) des géométries de retenue (4), c'est-à-dire qu'elles ont une forme de champignon, les géométries de retenue (4) s'étendant linéairement dans une direction normale à la section transversale en forme de champignon, plusieurs géométries de retenue linéaires (4) étant disposées parallèlement les unes aux autres.

6. Récipient en matière synthétique selon la revendication 5, **caractérisé en ce que** la paroi de récipient (1) comporte une couche formant barrière (7) dans la zone de fixation et les géométries de retenue (4) se trouvent devant la couche formant barrière (7), donc ne pénètrent pas dans la couche formant barrière (7) .

7. Récipient en matière synthétique selon l'une au moins des revendications 5 à 6, **caractérisé en ce que** la surface de fixation (3) de l'élément structurel intérieur (2) vient en appui sur la zone de fixation de la paroi de récipient (1).

8. Récipient en matière synthétique selon l'une au moins des revendications 5 à 7, **caractérisé en ce que** la surface de fixation (3) de l'élément structurel intérieur (2) est formée sur toute la surface, donc ne comporte pas d'ouvertures.
